# EUROPEAN PATENT APPLICATION

(11) **EP 1 150 443 A2**
(43) Date of publication of application: **31.10.2001**
(21) Application number: 01400878.3
(22) Date of filing: 05.04.2001
(51) Int. Cl.: H04B 7/185

(54) **Integrated multispot satellite communication system in a multimedia broadcasting network**

(30) Priority: 26.04.2000 ES 200001066
(71) Applicant: ALCATEL, 75008 Paris (FR)
(72) Inventor: Ortega Rodriguez, Fernando, 28224 Pozuelo de Alarcon, Madrid (ES); Prat Aparicio, Josep, 28760 Tres Cantos, Madrid (ES); Rodriguez Martinez, Africa, 28005 Madrid (ES)
(74) Representative: Lamoureux, Bernard

(57) **Abstract**

Integrated multispot satellite communication system in a multimedia broadcasting network, mainly in digital video broadcasting (DVB) applications. The system employs the DVB-RCS mode in the uplink direction of the communication, i.e. towards the satellite, and multiplexes said signals into a DVB-S type signal in the downlink direction, i.e. the signal leaving the satellite, permitting a user to request broadband interactive services using standard stations both on the transmission side and on the reception side. A regenerator means on board the satellite serves to perform the multiplexing of said downlink signal.

## Description

The present invention relates to an integrated multispot satellite communication system in a multimedia broadcasting network, mainly in digital video broadcasting (DVB) applications that permits a user to request broadband interactive services using standard stations both on the transmission side and on the reception side, whereby said service is achieved economically.

### BACKGROUND OF THE INVENTION

The standard EN 300 421 of the ETSI (European Telecommunications Standards Institute) relates to DVB services over transparent satellite communication systems. The purpose of this standard is to provide direct to the user services known as DVB-S (digital video broadcasting via satellite), through an integrated receiver/decoder device that is located in the user's home. Its versatility in multiplexing permits the use of a transmission capacity encompassing a variety of television (TV) service configurations, including sound and data services. All the components of said services are time division multiplexed (TDM) on a single carrier. The most detailed description of this standard can be found in the ETSI publication, EN 300 421 V1.1.2 (1997 - 98) entitled: "Digital Video Broadcasting (DVB); Framing structure, channel coding and modulation for 11/12 GHz satellite services", whose content is included in this description by reference.

On the other hand, the ETSI standard known as DVB-RCS001 makes reference to interaction channels on a transparent satellite distribution system. The purpose of this standard is to provide basic specifications for the provision of interaction channels for interactive networks based on geostationary (GEO) satellites that incorporate fixed return channel satellite terminals (RCST). The service is known also as DVB-RCS (digital video broadcasting - return channel satellite). This standard facilitates the use of RCSTs for domestic installations both individual and collective types. It likewise supports the connection of said terminals with home data networks, and can be applied to all frequency bands allocated to GEO satellite services. The most detailed description of this standard can be found in the ETSI publication, TM2267r3DVB-RCS001rev12 (11^{th} February 2000) entitled: "Digital Video Broadcasting (DVB); Interaction Channel for Satellite Distribution Systems", whose content is included in this description by reference.

These two standards are of the mono-spot type; that is, the satellite defines a single zone as coverage zone. The mono-spot systems therefore present the drawback that, by having limited coverage zones, they are not suitable for more extensive areas on a global scale. The services related with each of said standards are presently employed in a mutually independent form.

The steadily growing user demand for interactive services makes it necessary for the satellite communication systems to support broadcasting with return channel to the end users when the latter may be scattered over entirely different and unlike regions of the world, and thereby facilitate better access and faster interconnection between them. This in turn makes it necessary to provide systems capable of broadcasting on networks that support multimedia having a multispot communication characteristic.

The service that DVB-S provides, although offering the possibility of direct communication to the user's home, has the drawback of not having foreseen the possibility of including a return channel in order that the user may communicate with the multimedia service provider. On the other hand, the service furnished through DVB-RCS, although it provides said return channel, does not include the possibility of direct communication with the user's home.

In the light of the foregoing, it has become necessary to facilitate an integrated multispot satellite communication system in a multimedia broadcasting system capable of supporting digital video broadcasting (DVB) applications in order to facilitate multimedia services directly to the user's home and permit, at the same time, that said user can establish communication with the multimedia service provider over a return channel.

One possible solution for this problem would be to design a system that makes use of special equipment that incorporates functions according to communication protocols specifically prepared for the above mentioned services. However, said specific design will not support the specifications established by the standards and therefore will imply major costs. Thus another problem to overcome would be to provide said system in such a manner that it could be offered to the users at a more economical price.

### DESCRIPTION OF THE INVENTION

The aforementioned problems are overcome by means of the multispot satellite communication system in a multimedia broadcasting network object of the present invention, which permits the users to be offered a multimedia broadcast service such that the user may communicate with the multimedia service provider via a return channel to the satellite, all of this in a substantially economical manner.

Said objective is achieved through a combined use of the standardised DVB-S and DVB-RCS services as shall be described here below, thereby obtaining a single, regenerative and multispot satellite system permitting the use of standard stations both on the transmission side and on the reception side. Thus, both the end user and the multimedia service provider employ a return channel according to the DVB-RCS standard via an uplink channel to the satellite.

On board the satellite the regenerative payload performs the multiplexing of the information coming from various sources into a data stream suitable for being received by a user who has available any standard integrated receiver/decoder equipment.

Thus, an object of the present invention is the provision of a multispot satellite communication system in a multimedia broadcasting network, which comprises at least one broadcasting unit capable of setting up bidirectional communication with a satellite and at least one user unit capable of setting up bidirectional communication with said satellite, said bidirectional communication comprising a downlink direction of transmitting from said satellite and an uplink direction of transmitting to said satellite, characterised in that said communication in the uplink direction contains at least one return channel to the satellite and said communication in the downlink direction is suitable for being processed directly by the user unit by means of a receiver/decoder device that forms part of said unit.

According to an aspect of the invention the system comprises at least one regenerator means for multiplexing the communication in the uplink direction producing a signal for carrying out the communication in the downlink direction.

According to another aspect of the invention said return channel is suitable for carrying information produced in the broadcasting unit or in the user unit.

According to another aspect of the invention the system comprises also a control unit suitable for carrying out the functions of control and administration of the network.

According to another aspect of the invention said control unit is suitable for establishing communication with the satellite in the uplink direction and in the downlink direction of the type of the respective communications from the broadcasting unit or from the user unit.

A further object of the present invention is to provide a regenerator unit characterised in that it comprises at least one demultiplexing means for demultiplexing uplink channels, at least one multiplexing means for multiplexing information bits to be sent in a channel in the downlink direction and at least one formatting means for giving format to said channel in the downlink direction in such a manner that it is suitable for being processed directly by a user unit by means of a receiver/decoder device that forms part of said unit.

An additional further object of the invention is to provide a method for carrying out multispot satellite communication in a multimedia broadcasting network that comprises at least one broadcasting unit capable of setting up bidirectional communication with a satellite and at least one user unit capable of setting up bidirectional communication with said satellite, said bidirectional communication being implemented in a downlink direction of transmitting from said satellite and an uplink direction of transmitting to said satellite, characterised in that said communication in the uplink direction contains at least one return channel to the satellite and said communication in the downlink direction may be processed directly by the user unit by means of a receiver/decoder device that forms part of said unit.

These and other characteristics of the invention are described in greater detail below with the help of the drawings attached hereto.

### BRIEF DESCRIPTION OF THE DRAWINGS

Figure 1 is a schematic diagram of a multispot satellite communication system in a multimedia broadcasting network, according to the present invention.
Figure 2 is a schematic diagram of the main components of a regenerator unit on board the satellite according to the present invention.

### DESCRIPTION OF A PREFERRED EMBODIMENT

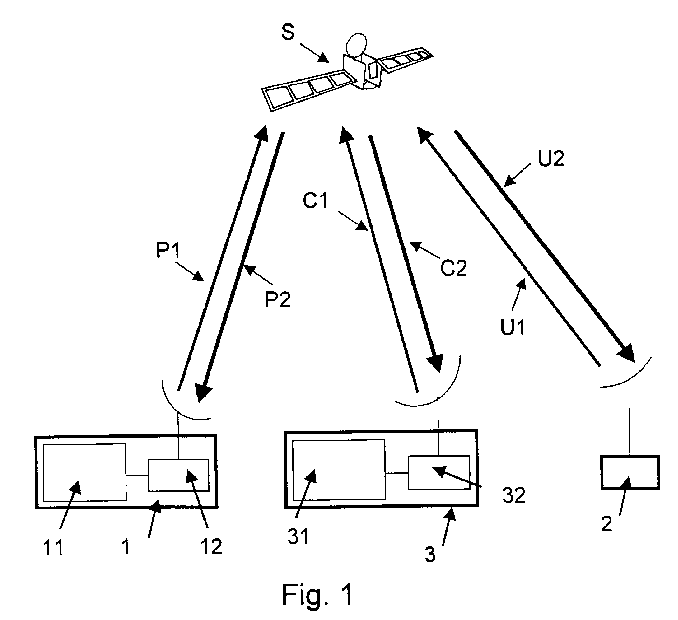

In the example that can be seen in figure 1, a multimedia services provider 1 in a DVB system sends multimedia service signals, like for example video on demand, to a user 2 via a satellite S. The provider 1 comprises, among other components necessary for its operation, a broadcasting signal generator means 11 and a return channel satellite terminal 12. The provider sends the broadcast signal P1, which incorporates the multimedia channel, to the user 2 via the satellite S. This signal contains also information concerning the return signalling that serves for accessing and synchronising with the interactive network. The signal P1 is therefore an uplink signal of the type of signals that comply with the aforementioned DVB-RCS standard.

A network controller means 3 serves for the control and administration of the network functions. In addition, it has the capability to transmit information directly to the satellite regarding signalling and timing for the network operation from a signal generator 31, employing the same DVB-RCS standard mode, while being capable of receiving the different return channels coming from the multimedia services provider and from the user, which are transmitted to it by the satellite S using DVB-S signals. The signalling is to be understood as including all network control operations, like for example network access request, authentication, synchronisation, etc. The direct signalling is that sent from the controller means 3, and the return signalling corresponds to the signal sent by the user 2 and/or the provider 1. Therefore, the signalling part of the signal P1 is addressed to the controller means 3. At the present time said information is transmitted by making use of a series of feeder stations. However, thanks to the present invention the use of said stations is suppressed.

The controller means comprises also a return channel satellite terminal 32 for receiving said DVB-S return signals.

The satellite S can be, preferably, of the multispot type whereby it may have a multiple coverage zone, making it possible for various users 2 to request, separately, broadband multimedia services independently of the location where they are at, provided that they are under the coverage zone of the multispot satellite S. In figure 1 only one user 2 is shown for reasons of simplicity, it being understood that there can be various users present in communication with the satellite S.

With this arrangement the user 2 requests, by means of a signal U1, a predetermined multimedia service from provider 1. Said signal is sent to the satellite S and contains the return channel to the provider 1 and the return signalling to the control centre 3, both in DVB-RCS format. The satellite S acts to transfer the request to the service provider 1 by means of a signal P2 of the DVB-S type that contains the return channel of the user 2 and the signalling of the controller means 3. Said signal P2 is received by the return channel satellite terminal 12 and is then processed in a conventional manner in order to deal with the request of the user 2.

The control operations for sending the signals U1 and P2, as well as the user identity and profile verification, are carried out in the controller means 3 by means of the interchange of signals C2 in DVB-S format and C1 in DVB-RCS format. The signal C1 serves for sending signalling to the provider 1 and/or to the user 2, and the signal C2 serves for receiving the return signalling from the provider 1 and/or the user 2. These signals shall have to pass through the return channel satellite terminal 32 in a bidirectional manner. Assuming that the user is identified and his profile is approved for receiving the service requested, the provider 1 sends the broadcast signal P1 up to the satellite. This signal is sent in DVB-RCS format. After being received in the satellite, this signal together with other possible uplink signals received from this same or other broadcasting sources are multiplexed in a multiplexing means, the description of which is provided hereunder, to obtain a signal in DVB-S format in the form of a data stream suitable for being received by any integrated receiver/decoder equipment. The multiplexing is carried out by means of a regenerator means on board the satellite. Said regenerator, in addition to performing the multiplexing, is capable of carrying out functions of cross-connection and/or broadcasting of channels to different coverage zones.

The user 2 receives the multimedia channel from the provider 1 and the signalling from the controller means 3, both in DVB-S format. The user 2 has incorporated in his home a return channel satellite terminal; thus he has the possibility of communicating over a return channel with said satellite S and via the aforementioned signal U1 which, by being in DVB-RCS format, permits this operation. In this way, all the signals received in the satellite S from the users are multiplexed in the same multiplexer. After being multiplexed, the resulting signal is sent by the satellite S to the provider 1 by means of the signal P2 that is in DVB-S format.

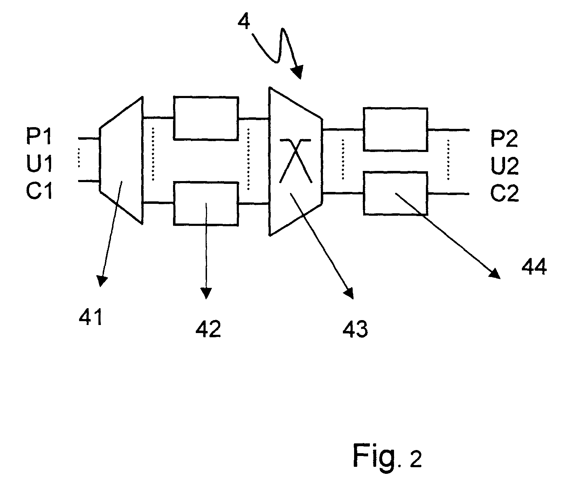

With reference to figure 2, a schematic diagram of the regenerator means 4 can be seen. Said regenerator means 4 comprises a demultiplexing unit 41 with the task of frequency-demultiplexing the uplink channels P1 coming from the provider 1, U1 coming from the user 2 or else C1 coming from the control centre 3 located in various coverage zones. All these channels are sent in DVB-RCS format. The demultiplexed signal is then applied to a series of units 42 for demodulation, descrambling and decoding of said channels, which continue to be in DVB-RCS format, in order to extract the information bits contained therein. Subsequently, the multiplexing is carried out and, where appropriate, the switching and/or broadcasting of the channels for the different satellite spots, all this being done in a unit 43 for performing said functions. Finally, the multiplexed data are formatted and modulated according to the DVB-S format in a series of units 44 intended for this purpose. Thus, the signal produced P2, U2, C2 can be transmitted in the downlink direction from the satellite to the provider 1, or to the user 2, or to the control centre 3, respectively. In this manner, the downlink channel can be received by a user that has any standard integrated receiver/decoder equipment.

It is to be pointed out, therefore, that the procedures described above can be carried out using conventional transmission and reception stations both on the provider side 1, and on the user side 2, whereby the problem of having to design specific equipment is eluded and, as a consequence, the costs of installation and services are kept low.

Moreover, the use of only one network controller means 3 is required, for which reason the overall system of the multimedia network is simplified.

Another benefit of the present invention is that it is avoided the use of gateway stations as defined in the reference models of an interactive network that encompasses both broadband and return channel services.

Finally, thanks to the system proposed by the invention connectivity for different users located in diverse coverage zones is provided.

## Claims

1. Multispot satellite communication system in a multimedia broadcasting network, which comprises at least one broadcasting unit (1) capable of setting up bidirectional communication with a satellite (S) and at least one user unit (2) capable of setting up bidirectional communication with said satellite (S), said bidirectional communication comprising a downlink direction (P2; U2; C2) of transmitting from said satellite (S) and an uplink direction (P1; U1; C1) of transmitting to said satellite (S), **characterised in that** said communication in the uplink direction (P1; U1; C1) contains at least one return channel to the satellite and said communication in the downlink direction (P2; U2; C2) is suitable for being processed directly by the user unit (2) by means of a receiver/decoder device that forms part of said unit.

2. System according to claim 1, **characterised in that** it comprises at least one regenerator means (4) for multiplexing the communication in the uplink direction (P1; U1) producing a signal for carrying out the communication in the downlink direction (P2; U2).

3. System according to any of the preceding claims, **characterised in that** said return channel is suitable for carrying information generated in the broadcasting unit (1) or in the user unit (2).

4. System according to any of the preceding claims, **characterised in that** it also comprises a control unit (3) suitable for performing network control and management functions.

5. System according to claim 4, **characterised in that** said control unit is suitable for establishing communication with the satellite (S) in the uplink direction (C1) and in the downlink direction (C2) of the type of the respective communications of claim 1.

6. Regenerator unit (4) to be included in the system of claim 1, **characterised in that** it comprises at least one demultiplexing means (41) for demultiplexing uplink channels (P1; U1; C1), at least one multiplexing means (43) for multiplexing information bits to be sent in a channel in the downlink direction (P2, U2; C2) and at least one formatting means (44) for giving format to said channel in the downlink direction in such a manner that it is suitable for being processed directly by a user unit (2) by means of a receiver/decoder device that forms part of said unit.

7. Method for carrying out multispot satellite communication in a multimedia broadcasting network that comprises at least one broadcasting unit (1) capable of setting up bidirectional communication with a satellite (S) and at least one user unit (2) capable of setting up bidirectional communication with said satellite (S), said bidirectional communication being carried out in a downlink direction (P2; U2, C2) of transmission from said satellite (S) and an uplink direction (P1; U1; C1) of transmission to said satellite (S), **characterised in that** said communication in the uplink direction (P1; U1; C1) contains at least one return channel to the satellite and said communication in the downlink direction (P2; U2; C2) may be processed directly by the user unit (2) by means of a receiver/decoder device that forms part of said unit.
